# FASCICULE DE BREVET EUROPEEN

(11) **EP 2 109 647 B1**
(45) Date de publication et mention de la délivrance du brevet: **24.10.2012**
(21) Numéro de dépôt: 08761820.3
(22) Date de dépôt: 31.01.2008
(51) Int. Cl.: C09J 153/02, B32B 27/32, C08L 53/02

(54) **COMPOSITION ADHÉSIVE POUR ÉTIQUETTE AUTO-ADHÉSIVE DÉCOLLABLE**
HAFTZUSAMMENSETZUNG FÜR ABLÖSBARES DRUCKEMPFINDLICHES HAFTETIKETT
ADHESIVE COMPOSITION FOR REMOVABLE PRESSURE SENSITIVE ADHESIVE LABEL

(30) Priorité: 02.02.2007 FR 0700735
(43) Date de publication de la demande: 21.10.2009
(73) Titulaire: BOSTIK SA, 92400 Courbevoie (FR)
(72) Inventeur: FOUQUAY, Stéphane, André, F-76130 Mont Saint Aignan (FR); GOUBARD, David, F-60200 Compiegne (FR)
(74) Mandataire: Granet, Pierre
(86) Numéro de dépôt international: PCT/FR2008/000112
(87) Numéro de publication internationale: WO 2008/110685

(56) Documents cités:
- EP-A1- 0 659 787
- WO-A-00/75257
- WO-A-97/30844
- WO-A-2006/107763
- FR-A1- 2 820 751
- US-A- 4 680 333
- US-A- 4 997 709
- US-A- 5 932 648

## Description

La présente invention a pour objet une composition adhésive thermofusible sensible à la pression convenant au collage d'étiquettes auto-adhésives qui sont décollables durant un procédé de recyclage des articles auxquels elles ont été fixées (tels que des emballages et/ou récipients, par exemple des bouteilles de verre). Elle concerne également un système multicouche comprenant ladite composition, une étiquette auto-adhésive, l'article étiqueté correspondant, ainsi qu'un procédé de recyclage dudit article comprenant une étape de décollement de l'étiquette.

Bien des emballages et/ou récipients étiquetés sont soumis, après élimination de leur contenu, à des traitements de nettoyage (ou de recyclage) soit en vue de leur réutilisation, soit, après destruction, en vue de la récupération du matériau qui les constitue. De tels traitements nécessitent souvent de séparer complètement l'étiquette de l'article auquel elle est fixée, sans laisser de résidus d'adhésif à la surface de ce dernier, de manière à faciliter le procédé de recyclage.

Ces procédés de recyclage, tel celui mis en oeuvre pour le nettoyage des bouteilles de verre usagées, par exemple des bouteilles de bière, comprennent généralement une étape d'immersion de l'article à nettoyer dans des compositions aqueuses basiques maintenues à des températures comprises entre 60 et 100°C. Une telle étape a également pour but le décollement et la séparation de l'étiquette fixée sur l'article.

Les adhésifs sensibles à la pression (également dénommés colles auto-adhésives ou encore, en anglais, "Pressure Sensitive Adhesives" ou PSA) sont des substances conférant au support qui en est revêtu un pouvoir collant immédiat à température ambiante (souvent désigné sous le terme de "tack"), lequel permet son adhésion instantanée à un substrat sous l'effet d'une pression légère et brève. Les PSA sont largement utilisés pour la fabrication d'étiquettes auto-adhésives qui sont fixées sur des articles à des fins de présentation d'informations (telles que code barre, dénomination, prix) et/ou à des fins décoratives.

Les PSA sont généralement appliqués par des procédés d'enduction en continu sur la totalité de la surface d'une couche support imprimable de grandes dimensions constituée de papier ou de film d'un matériau polymère à une ou plusieurs couches. La couche d'adhésif qui recouvre la couche support imprimable est elle-même recouverte d'une couche protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ce système multicouche peut être ultérieurement converti en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche protectrice peut être facilement enlevée sans modification de la couche d'adhésif qui reste fixée sur la couche support imprimable. Après séparation de sa couche protectrice, l'étiquette est appliquée à une température proche de la température ambiante sur l'article à revêtir soit manuellement, soit à l'aide d' étiqueteuses sur des chaînes automatisées de conditionnement.

Les PSA permettent, en raison de leur tack élevé à température ambiante, une prise ou accroche rapide de l'étiquette sur l'article à revêtir (par exemple des bouteilles), propre à l'obtention de cadences de production industrielle importantes.

Le brevet US3763117 décrit un PSA à base d'acrylate avec de bonnes propriétés adhésives qui permet une séparation facile à chaud par une solution aqueuse basique.

Le brevet US5385965 décrit également un PSA permettant après enduction sur un support papier ou film d'un matériau polymère l'obtention d'une étiquette se détachant du substrat sous l'action d'une solution alcaline à chaud. Ce PSA se présente sous la forme d'une émulsion aqueuse d'un copolymère à base d'acrylate ou d'un copolymère de type styrène-butadiène. La teneur en extrait sec de cette émulsion ne dépasse pas 70 %, de sorte que l'enduction de ce PSA sur la couche support est compliquée par la nécessité d'une étape de séchage de l'émulsion. De plus, de tels adhésifs ont pour inconvénient de passer partiellement en solution ou en suspension dans les compositions aqueuses mise en oeuvre pour le recyclage des bouteilles étiquetées, ce qui induit pour les installations industrielles des contraintes de retraitement de ces compositions avant rejet dans l'environnement.

On connaît par le brevet US4680333 une composition adhésive thermofusible sensible à la pression comprenant un copolymère bloc styrène-isoprène-styrène, une résine aliphatique à basse température de ramollissement et un sel métallique d'un acide gras. Cette composition permet, après son enduction sur un support papier puis adhésion de ce support sur un substrat, de décoller le support ainsi fixé à tout moment, à sec et à température ambiante, sans autre traitement, conférant ainsi au support enduit un comportement d'adhésif repositionnable.

Les adhésifs thermofusibles (souvent désignés sous l'appellation anglaise de "Hot Melt adhesives" ou HM) sont des substances solides à température ambiante qui ne contiennent ni eau ni solvant. Ils sont appliqués à l'état fondu et se solidifient lors du refroidissement, formant ainsi un joint qui assure la fixation des substrats à assembler. Certains Hot Melt sont formulés de manière à conférer au support qui en est revêtu un caractère relativement dur et dénué de tack. D'autres Hot Melt assurent au support un caractère relativement mou et un tack important : ce sont des PSA qui sont largement utilisés pour la fabrication d'étiquettes auto-adhésives ; les adhésifs correspondants sont désignés par l'appellation d' "adhésifs thermofusibles sensibles à la pression" ou encore, en anglais, par celle de "Hot Melt Pressure Sensitive Adhesive" (ou HMPSA).

La composition HMPSA décrite par le brevet US4680333 ne permet pas de coller de façon permanente sur un substrat l'étiquette qui en est enduite, puisque celle-ci peut être décollée à sec à tout moment.

La présente invention a pour buts de proposer un adhésif qui permette de coller une étiquette de façon permanente sur un article, tel qu'un emballage et/ou un récipient (par exemple des bouteilles de verre), et qui offre de plus la possibilité de décoller rapidement et complètement l'étiquette durant une étape d'immersion de l'article étiqueté dans une solution aqueuse basique à température élevée, l'adhésif restant essentiellement fixé sur l'étiquette après sa séparation.

Il a à présent été trouvé que ces buts peuvent être atteints en totalité ou en partie au moyen de la composition adhésive thermofusible sensible à la pression qui est objet de la présente invention.

L'invention concerne donc une composition adhésive thermofusible sensible à la pression (HMPSA) comprenant :
- a) de 25 à 50 % d'un mélange de copolymères blocs styréniques consistant de 20 à 90 % d'un ou plusieurs copolymères tribloc de type Styrène-Butadiène-Styrène (ou SBS), et de 10 à 80 % d'un ou plusieurs copolymères dibloc de type styrène-butadiène (ou SB), la teneur en motifs styréniques globale dudit mélange étant comprise entre 15 et 40 % ;
- b) de 45 à 75 % d'une ou plusieurs résines tackifiantes compatibles ayant une température de ramollissement comprise entre 80 et 150 °C ;
- c) de 0,5 à 5,5 % d'un ou plusieurs acides gras dont la chaîne hydrocarbonée comprend de 10 à 22 atomes de carbone, sous forme acide ou sous la forme d'un sel d'un métal alcalin ou alcalino-terreux.

En l'absence d'indication contraire, les pourcentages utilisés dans le présent texte pour exprimer des quantités correspondent à des pourcentages poids/poids.

La composition selon l'invention permet d'obtenir après enduction sur un support de polypropylène orienté (OPP) une adhésion permanente de ce dernier sur un substrat de verre, correspondant à un pouvoir adhésif (mesuré par le test de pelage à 180° sur verre) avantageusement compris entre 2 et 15 N/cm, de préférence entre 2 et 10 N/cm. L'adhésion du support sur le substrat de verre se maintient dans le temps, y compris en présence d'une forte humidité relative. Le support d' OPP ainsi fixé sur substrat de verre se décolle toutefois facilement et complètement durant une étape d'immersion en milieu aqueux basique, sans laisser de trace d'adhésif sur ledit substrat.

Contrairement aux PSA à base d'acrylate connus de l'art antérieur, la composition selon l'invention est un HMPSA dont la forme solide à température ambiante lui permet avantageusement d'être appliqué par enduction à l'état fondu sur la couche support imprimable de l'étiquette, sans qu'il soit nécessaire de mettre en oeuvre une étape de séchage.

De plus, dans l'étape d'immersion, l'adhésif demeure pour l'essentiel fixé au support d'OPP après décollement de ce dernier du substrat de verre. Ainsi l'adhésif ne se dissout (ou ne se disperse) pas dans les compositions aqueuses mises en oeuvre dans le traitement de recyclage, ce qui évite des traitements supplémentaires de dépollution des bains de lavage.

Les copolymères tribloc de type styrène-butadiène-styrène et dibloc de type styrène-butadiène compris dans la composition selon l'invention ont une masse molaire moyenne en poids M_{w} comprise entre 60 kDa et 400 kDa et sont généralement linéaires. En l'absence d'indication contraire, les masses molaires moyennes en poids M_{w} qui sont données dans le présent texte sont exprimées en dalton (Da) et sont déterminées par Chromatographie par Perméation de Gel, la colonne étant calibrée avec des étalons de polystyrène.

Le mélange des copolymères styréniques tribloc et dibloc est de préférence constitué de 60 à 80 % de SBS et de 20 à 40 % de SB. La teneur en motifs styréniques globale du mélange est avantageusement comprise entre 25 et 35 %. Les copolymères de type SBS et SB sont disponibles commercialement, y compris sous la forme de mélanges tribloc/dibloc. L'Europrène^{®} Sol T6320 et l'Europrène^{®} Sol T 166 de la société Polimeri Europa (Italie) ou encore le Kraton^{®} D1152 de la société Kraton sont des exemples de tels produits.

L'Europrène^{®} Sol T6320 est un mélange constitué d'environ 25 % de copolymère tribloc SBS de M_{w} environ 170 kDa, et de 75 % de copolymère dibloc SB de M_{w} environ 70 kDa, chacun des copolymères ayant environ 30 % de styrène. L' Europrène^{®} Sol T 166 est un mélange constitué, respectivement, de 90 % et de 10 % de tribloc SBS (M_{w} environ 121 kDa) et de dibloc SB (M_{w} environ 64 kDa), chacun de ces copolymères ayant environ 30 % de styrène.

La ou les résines tackifiantes ont des masses molaires moyennes en poids M_{w} généralement comprises entre 300 et 5000 et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

Ces résines sont disponibles commercialement, et parmi celles ayant une température de ramollissement comprise entre 80 et 150 °C, on peut citer par exemple dans les catégories ci-dessus les produits suivants :
(i) Sylvalite^{®} RE 100S de la société Arizona Chemical, Dertoline^{®} G2L et Dertopoline^{®} CG de la société française DRT ;
(ii) Escorez^{®} 5600 disponible auprès de Exxon Chemicals qui est une résine dicyclopentadiène hydrogénée modifiée par un composé aromatique ayant une température de ramollissement de 100°C et un M_{w} d'environ 980 Da ; Escorez^{®} 5400 également de la société Exxon Chemicals avec une température de ramollissement de 100°C ; Wingtack^{®} 86 de la société Cray-Vallée ; Régalite^{®} R5100 de Eastman ;
(iii) Dertophène^{®} T de la société DRT ; Sylvarez^{®} TP95 de Arizona Chemical qui est une résine terpène phénolique avec une température de ramollissement de 95°C et un M_{w} d'environ 1120 Da ;
(iv) Sylvarez^{®} ZT 105 LT de Arizona Chemical qui est un copolymère styrène/terpène avec un point de ramollissement de 105°C.

Par résine tackifiante compatible, on entend désigner une résine tackifiante qui lorsqu'elle est mélangée dans les proportions 50 %/50 % avec un copolymère bloc SBS ou SB donne un mélange substantiellement homogène.

La température (ou point) de ramollissement est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d' acier de diamètre environ 9,5 mm est centrée sur le disque de résine solide. La température de ramollissement est -durant la phase de montée en température du bain à raison de 5°C par minute- la température à laquelle le disque de résine flue d'une hauteur de 25,4 mm sous le poids de la bille.

Les résines tackifiantes ayant une température de ramollissement comprise entre 95 et 110°C sont préférées, comme par exemple l'Escorez^{®} 5600 ou 5400, la Sylvarez^{®} ZT 105 LT ou encore la Sylvarez^{®} TP95.

Les acides gras compris dans la composition selon l'invention ont une chaîne hydrocarbonée comprenant de 10 à 22 atomes de carbone. Ces acides gras peuvent être choisis parmi :
- (α) des acides gras monocarboxyliques, saturés ou insaturés, purs ou en mélanges,
- (β) des mélange d'acides gras polycarboxyliques, saturés ou insaturés, de type dimère ou trimère.

Le radical hydrocarboné des acides gras monocarboyliques (α) peut être linéaire ou ramifié. Lorsqu'on utilise des acides purs, on préfère des radicaux hydrocarbonés comprenant entre 14 et 20 atomes de carbone.

L'utilisation de mélanges des acides gras monocarboxyliques (α) est avantageuse puisque ces mélanges sont issus de corps gras d'origine animale ou végétale sous la dénomination de coupes. Ces coupes sont riches en radicaux hydrocarbonés comprenant de 16 à 18 atomes de carbone. On peut citer de manière non limitative s'agissant de ces coupes :
- les acides gras oléïques, tel le RADIACID^{®} 208 disponible auprès de la société OLEON ;
- les acides gras de tournesol, de coprah, de colza (RADIACID^{®} 166), de soja (RADIACID^{®} 110 et RADIACID^{®} 121) ;
- les acides gras de suif, comme les RADIACID^{®} 401 et RADIACID^{®} 403 ;
- les acides gras de suif hydrogéné comme les RADIACID^{®} 408 et RADIACID^{®} 409.

Les mélanges (β) d'acides gras polycarboxyliques sont obtenus par dimérisation de coupes d'acides gras monocarboxyliques insaturés comprenant majoritairement des radicaux hydrocarbonés à 18 atomes de carbone. Les produits correspondants sont essentiellement des dimères (comme les RADIACID^{®} 951 et RADIACID^{®} 970) ou un mélange de dimères et de trimères (comme le RADIACID^{®} 980).

Les produits (α) et (β) ont un Indice d'Acide (I.A.) compris entre 170 et 200 mg KOH/g et un Indice d'Iode compris entre 0 et 140. L'Indice d'Acide représente la quantité d'acide gras libre et est le nombre de milligrammes de potasse nécessaire pour neutraliser l'acidité de 1 gramme de corps gras, déterminé par titrimétrie. L'Indice d'Iode (I.I.) représente le nombre de doubles liaisons dans les radicaux hydrocarbonés, et correspond au nombre de grammes d'iode fixés par cent grammes de corps gras.

Ainsi le RADIACID^{®} 208 a un I.A. compris entre 184 et 196 et un I.I. compris entre 75 et 94. Le RADIACID^{®} 970 a un I.A. compris entre 188 et 198 et un I.I. inférieur à 94. Le RADIACID^{®} 980 a un I.A. de 180 et un I.I. inférieur à 94. Le RADIACID^{®} 403 a un I.A. compris entre 192 et 198 et un I.I. de 42 à 51. Les acides gras de coprah ont un I.A. de 250 à 264 et un I.I. de 6 à 9.

Les mélanges d'acides gras polycarboxyliques de type dimère ou trimère (β) sont préférés en raison d'un tack amélioré. La forme acide des acides gras mis en oeuvre dans l'HMPSA selon l'invention est particulièrement avantageuse.

Selon une variante préférée, l'HMPSA comprend :
- de 40 à 50 % du mélange a) des copolymères tribloc et dibloc ;
- de 45 à 55 % de résine(s) tackifiante(s) b) ; et
- de 1 à 5 % d'acide(s) gras c).

Une quantité de 0,1 à 2 % d'un ou plusieurs stabilisants (ou anti-oxydant) est en outre de préférence incluse dans la composition selon l'invention. Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox^{®} 1010 de CIBA. Les anti-oxydants primaires peuvent être utilisés seuls ou en combinaison avec d'autres anti-oxydants tels que des phosphites comme l'Irgafos^{®} 168 également de CIBA, ou encore avec des stabilisants UV tels que des amines.

La composition selon l'invention peut également inclure un plastifiant tel qu'une huile paraffinique et naphténique (comme le Primol^{®} 352 de la société ESSO) ou encore une cire d'un homopolymère de polyethylène (comme l'A-C^{®} 617 de Honeywell), ou une cire d'un copolymère de polyéthylène et d'acétate de vinyle, ou encore des pigments, des colorants ou des charges.

La composition thermofusible auto-adhésive selon l'invention est préparée par simple mélange de ses composants à une température comprise entre 130 et 200 °C, jusqu'à obtention d'un mélange homogène. Les techniques de mélange requises sont bien connues de l'homme du métier.

La présente invention a également pour objet un système multicouche comprenant :
- une couche d'adhésif, constituée de la composition adhésive thermofusible sensible à la pression selon l'invention ;
- une couche support imprimable adjacente à ladite couche adhésive, constituée de papier ou de film polymère à une ou plusieurs couches ;
- une couche protectrice adjacente à ladite couche d'adhésif.

On préfère utiliser comme couche support imprimable un film bi-couche OPP/PET dont la couche d'OPP est adjacente à la couche d'adhésif.

L'HMPSA selon l'invention est appliqué à l'état fondu à une température supérieure à 130°C sur la couche support imprimable à raison d'une quantité comprise entre 15 et 30 g/m² pour constituer la couche d'adhésif. L'application est réalisée par des techniques d'enduction connues comme par exemple de type buse à lèvre (à une température d'environ 160 à 180°C) ou de type rideau (à une température d'environ 120 à 180 °C). L'application de l'HMPSA par buse à lèvre est généralement effectuée sur la couche protectrice, l'ensemble étant alors contrecollé sur la couche support (enduction par transfert). L'application de l'HMPSA par enduction de type rideau peut être directement réalisée sur la couche support, en fonction de la température d'enduction.

L'invention concerne également une étiquette auto-adhésive susceptible d'être obtenue par transformation du système multicouche décrit précédemment. Le procédé de transformation mis en oeuvre comprend généralement au moins une étape d'impression sur la couche support imprimable et une étape de découpe.

L'invention a également pour objet un article revêtu de ladite étiquette.

L'article étiqueté est de préférence un emballage ou récipient constitué de verre ou d'une matière plastique usuelle choisie parmi le PolyEthylène Téréphtalate (PET), le PolyChlorure de Vinyle (PVC), le PolyEthylène (PE) ou le PolyPropylène (PP). Une bouteille de verre est plus particulièrement préférée. Les bouteilles de verre concernées peuvent ou non avoir reçu au cours de leur fabrication un traitement d'enduction destiné à maintenir dans le temps leurs propriétés mécaniques et à les protéger contre les rayures. Un tel traitement conduit par exemple au dépôt à la surface du verre d'une couche d'oxyde métallique, éventuellement recouverte d'une couche supplémentaire de nature cireuse.

L'invention concerne enfin un procédé de recyclage d'un article étiqueté, comprenant une étape de décollement de l'étiquette par immersion de l'article étiqueté dans une solution aqueuse basique maintenue à une température comprise entre 60 et 100 °C, caractérisé en ce que l'article étiqueté est tel que défini précédemment.

Le décollement de l'étiquette par ce procédé aboutit avantageusement à sa séparation complète de l'article, sans laisser à la surface de ce dernier de résidu d'adhésif et sans que la composition adhésive ne contamine la solution aqueuse basique de lavage. Dans le cadre d'une mise en oeuvre industrielle du procédé, il en résulte une moindre pollution des eaux de lavage et une économie améliorée du procédé de recyclage, notamment au plan de la quantité d'eau consommée. Les étiquettes ainsi séparées des articles traités peuvent être rassemblées et évacuées du bain de lavage par des moyens mécaniques appropriés.

Le procédé objet de l'invention est de préférence mis en oeuvre à une température d'environ 80°C.

Le pouvoir adhésif de l'HMPSA selon l'invention est évalué par le test de pelage (ou peel) à 180°C sur plaque de verre tel que décrit dans la méthode de test FINAT n° 1, publiée dans le Manuel Technique FINAT 6ème édition, 2001. FINAT est la fédération internationale des fabricants et transformateurs d'étiquettes auto-adhésives. Le principe de ce test est le suivant. L'HMPSA est préalablement enduit à raison de 20 g/m² sur la face OPP d'une couche support constituée d'un film PET de 19 µm d'épaisseur qui est contrecollé sur un film OPP de 50 µm d'épaisseur au moyen d'une colle polyuréthanne bicomposant. Une éprouvette sous forme de bande rectangulaire (25 mm x 175 mm) est découpée dans le support auto-adhésif ainsi obtenu. Cette éprouvette est fixée sur un substrat constitué d'une plaque de verre. L'assemblage obtenu est laissé 20 mn à température ambiante. Il est alors introduit dans un appareil de traction capable d'effectuer le pelage ou décollement de la bande sous un angle de 180° et avec une vitesse de séparation de 300 mm par minute. L'appareil mesure la force requise pour décoller la bande dans ces conditions. Le résultat est exprimé en N/cm. Le peel à 180° sur plaque de verre des colles destinées à la fabrication d'étiquettes auto-adhésives est généralement supérieur à 2 N/cm, de préférence à 4 N/cm.

Le pouvoir collant immédiat ou tack de l'HMPSA selon l'invention est évalué par le test d'adhésion instantanée dit de la boucle, décrit dans la méthode de test FINAT n° 9. L'HMPSA est préalablement enduit à raison de 20 g/m² sur un film d'OPP de 50 µm d'épaisseur, de manière à obtenir une bande rectangulaire de 25 mm sur 175 mm. Les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque. Le pouvoir collant d'un PSA est généralement supérieur ou égal à 1 N/cm².

L'aptitude au décollement à chaud en milieu aqueux basique d'étiquettes enduites de l'HMPSA selon l'invention et préalablement fixées sur substrat de verre est évaluée par le test suivant.

On utilise des bouteilles de verre de diamètre 5 cm et de hauteur environ 20 cm réparties en 2 groupes en fonction de la nature du verre qui les constitue. Ce verre présente en effet 2 types de couche superficielle, selon le traitement d'enduction qui a été appliqué lors de la fabrication des bouteilles. Le 1" type de couche comprend essentiellement de l'oxyde d'étain. Le 2^{ème} type comprend essentiellement une émulsion de cire de polyéthylène oxydée qui a été appliquée sur une couche d'oxyde d'étain. Le 2^{ème} type de couche est caractéristique de bouteilles de verre neuves. Le 1^{er} type est caractéristique de bouteilles de verre ayant déjà été immergées dans une solution aqueuse basique, durant au moins un cycle de nettoyage. Le 1^{er} groupe de bouteilles est désigné ci-après par "SnO", le 2^{ème} par le sigle "PE".

L'HMPSA à tester est enduit sur la même couche support et dans les mêmes conditions que dans le test de pelage à 180°. Une étiquette rectangulaire (de 7 cm sur 5 cm) est découpée dans le support auto-adhésif ainsi obtenu. Elle est fixée sur une bouteille de verre par simple pression, l'ensemble étant laissé 24 heures à température ambiante.

La bouteille de verre étiquetée est ensuite immergée dans un bain d'eau thermostaté à 80°C ayant un pH de 12.

On évalue visuellement après 60 s d'immersion de la bouteille le pourcentage de décollement de l'étiquette (ci-après "% décollement"), et ce pour des bouteilles de type "SnO" et de type "PE".

La quantité d'adhésif présent dans la solution aqueuse basique après immersion de la bouteille étiquetée et séparation de l'étiquette est mesurée de la façon suivante. Au cours de la mise en oeuvre du test précédent, on détermine le poids P1 de l'étiquette auto-adhésive avant sa fixation sur la bouteille de verre. Après une durée d'immersion de 20 minutes de la bouteille et de l'étiquette dans la solution aqueuse basique, l'étiquette qui est alors décollée de la bouteille est récupérée, séchée à poids constant P2. La différence de poids P1-P2, exprimée en pourcentage relativement à P1, correspond à la perte en HMPSA de l'étiquette auto-adhésive.

### Exemple 1 :

La composition figurant dans le tableau 1 suivant est préparée par simple mélange à chaud à 180 °C des ingrédients. Cette composition contient 0,5 % d'Irganox^{®} 1010 et 0,5 % d'Irgafos^{®} 168. La teneur des autres ingrédients est indiquée dans le tableau 1.

Cette composition contient 46 % d'un mélange de 70 % d'un copolymère tribloc SBS et de 30 % d'un copolymère dibloc SB, dont la teneur globale en monomère styrène est de 30%.

Le résultat du test de pelage à 180° sur verre de la composition obtenue est de 4,7 N/cm. Le test d'adhésion instantanée de la boucle donne 1 N/cm² valeur caractéristique d'un PSA.

Le test de décollement à chaud en milieu aqueux basique donne pour les 2 types de bouteilles 100% de décollement. Après séparation de l'étiquette on n'observe aucune trace d'adhésif sur la surface des bouteilles.

La perte en HMPSA de l'étiquette est inférieure à 1 %, indiquant que la solution aqueuse basique de lavage ne contient sensiblement pas d'HMPSA.

### Exemples 2 et 3 :

On répète l'exemple 1 avec les compositions indiquées dans le tableau 1. On obtient sensiblement les mêmes résultats.

**Tableau 1**

| Ingrédient | Teneur en % | | |
|---|---|---|---|
| | Exemple 1 | Exemple 2 | Exemple 3 |
| Europrène^{®} Sol T 166 | 32 | 31 | 31 |
| Europrène^{®} Sol T6320 | 14 | 14 | 14 |
| Sylvarez^{®} ZT 105 LT | 27 | 26 | 26 |
| Escorez^{®} 5600 | 23 | 22 | 22 |
| Radiacide^{®} 208 | 3 | 3 | 2 |
| Primol^{®} 352 | 0 | 3 | 4 |

### Exemples 4 à 8 :

On répète l'exemple 1 pour les compositions indiquées dans le tableau 2.

Les résultats des tests sont également indiqués dans le tableau 2.

Durant la mise en oeuvre du test de décollement à chaud en milieu aqueux basique pour ces exemples, on n'observe après séparation de l'étiquette aucune trace d'adhésif sur la surface des bouteilles. La perte en HMPSA de l'étiquette est de 0%, indiquant que la solution aqueuse basique de lavage ne contient pas d'HMPSA.

| | Teneur en % | | | | |
|---|---|---|---|---|---|
| Ingrédient | Exemple 4 | Exemple 5 | Exemple 6 | Exemple 7 | Exemple 8 |
| Europrène^{®} Sol T 166 | 32 | 31 | 31 | 32 | 32 |
| Europrène^{®} Sol T6320 | 14 | 12 | 14 | 14 | 14 |
| Sylvarez^{®} ZT 105 LT | 27 | 25 | 25 | 27 | 27 |
| Escorez^{®} 5600 | 23 | 20 | 22 | 23 | 23 |
| Radiacide^{®} 970 | 3 | 3 | - | - | - |
| Radiacide^{®} 403 | - | - | 3 | - | - |
| Acide coprah | - | - | - | 3 | - |
| Radiacide^{®} 980 | - | - | - | - | 3 |
| Primol^{®} 352 | - | 3 | 4 | - | - |
| A-C^{®} 617 | - | 5 | - | - | - |
| | | | | | |
| Peel 180° sur verre (N/cm) | 4,7 | 6 | 2 | 3,5 | 6 |
| Adhésion instantanée de la boucle (N/cm²) | 3,4 | 4,6 | 1 | 1 | 4,6 |
| % décollement PE | 90 | 100 | 30 | 30 | 80 |
| % décollement SnO | 100 | 100 | 100 | 100 | 100 |

## Revendications

1. Composition adhésive thermofusible sensible à la pression (HMPSA) comprenant :
- a) de 25 à 50 % d'un mélange de copolymères blocs styréniques consistant de 20 à 90 % d'un ou plusieurs copolymères tribloc de type Styrène-Butadiène-Styrène (ou SBS), et de 10 à 80 % d'un ou plusieurs copolymères dibloc de type styrène-butadiène (ou SB), la teneur en motifs styréniques globale dudit mélange étant comprise entre 15 et 40 % ;
- b) de 45 à 75 % d'une ou plusieurs résines tackifiantes compatibles ayant une température de ramollissement comprise entre 80 et 150 °C ;
- c) de 0,5 à 5,5 % d'un ou plusieurs acides gras dont la chaîne hydrocarbonée comprend de 10 à 22 atomes de carbone, sous forme acide ou sous la forme d'un sel d'un métal alcalin ou alcalino-terreux.

2. HMPSA selon la revendication 1, **caractérisé en ce que** le mélange des copolymères styréniques tribloc et dibloc est constitué de 60 à 80 % de SBS et de 20 à 40 % de SB.

3. HMPSA selon l'une des revendications 1 ou 2, **caractérisé en ce que** la teneur en motifs styréniques globale du mélange des copolymères styréniques tribloc et dibloc est comprise entre 25 et 35%.

4. HMPSA selon l'une des revendications 1 à 3, **caractérisé en ce que** les résines tackifiantes sont choisies parmi :
- (i) les colophanes d'origine naturelle ou modifiées et leurs dérivés hydrogénés, deshydrogénés, dimérisés, polymérisés ou estérifiés par des monoalcools ou des polyols ;
- (ii) des résines obtenues par hydrogénation, polymérisation ou copolymérisation de mélanges d'hydrocarbures aliphatiques insaturés ayant environ 5, 9 ou 10 atomes de carbone issus de coupes pétrolières ;
- (iii) des résines terpéniques, éventuellement modifiées par action de phénols ; et
- (iv) des copolymères à base de terpènes naturels.

5. HMPSA selon l'une des revendications 1 à 4, **caractérisé en ce que** la température de ramollissement de la ou des résines tackifiantes est comprise entre 95 et 110°C.

6. HMPSA selon l'une des revendications 1 à 5, **caractérisé en ce que** les acides gras sont choisis parmi :
- (α) des acides gras monocarboxyliques, saturés ou insaturés, purs ou en mélanges,
- (β) des mélange d'acides gras polycarboxyliques, saturés ou insaturés, de type dimère ou trimère.

7. HMPSA selon l'une la revendication 6, **caractérisé en ce que** l'on utilise des mélanges d' acides gras monocarboxyliques (α) sous la forme de coupes issues de corps gras d'origine animale ou végétale.

8. HMPSA selon l'une la revendication 6, **caractérisé en ce que** l'on utilise des mélanges d'acides gras polycarboxyliques de type dimère ou trimère (β).

9. HMPSA selon l'une des revendications 1 à 8, **caractérisé en ce que** la forme acide des acides gras est mise en oeuvre.

10. HMPSA selon l'une des revendications 1 à 9, **caractérisé en ce qu'**il comprend :
- de 40 à 50 % du mélange a) des copolymères tribloc et dibloc ;
- de 45 à 55 % de résine(s) tackifiante(s) b) ; et
- de 1 à 5 % d'acide(s) gras c).

11. HMPSA selon l'une des revendications 1 à 10, **caractérisé en ce qu'**il comprend en outre de 0,1 à 2 % d'un ou plusieurs stabilisants ou anti-oxydant.

12. Système multicouche comprenant :
- une couche d'adhésif, constituée de l'HMPSA tel que défini dans l'une des revendications 1 à 11 ;
- une couche support imprimable adjacente à ladite couche adhésive, constituée de papier ou de film polymère à une ou plusieurs couches ;
- une couche protectrice adjacente à ladite couche d'adhésif.

13. Système multicouche selon la revendication 12, **caractérisé en ce que** la couche support imprimable est un film bi-couche OPP/PET dont la couche d'OPP est adjacente à la couche d'adhésif.

14. Etiquette auto-adhésive susceptible d'être obtenue par transformation du système multicouche tel que défini dans l'une des revendications 12 ou 13.

15. Article revêtu de l'étiquette telle que définie dans la revendication 14.

16. Article selon la revendication 15, consistant en un emballage ou récipient constitué de verre ou d'une matière plastique, de préférence en une bouteille de verre.

17. Procédé de recyclage d'un article étiqueté, comprenant une étape de décollement de l'étiquette par immersion de l'article étiqueté dans une solution aqueuse basique maintenue à une température comprise entre 60 et 100 °C, **caractérisé en ce que** l'article étiqueté est tel que défini dans l'une des revendications 15 ou 16.

## Claims

1. A hot-melt pressure-sensitive adhesive (HMPSA) composition comprising:
a) 25 to 50% of a blend of styrene block copolymers consisting of 20 to 90% of one or more SBS (styrene/butadiene/styrene) triblock copolymers and 10 to 80% of one or more SB (styrene/butadiene) diblock copolymers, the overall content of styrene units of said blend being between 15 and 40%;
b) 45 to 75% of one or more compatible tackifying resins having a softening temperature of between 80 and 150°C; and
c) 0.5 to 5.5% of one or more fatty acids, the hydrocarbon chain of which comprises 10 to 22 carbon atoms, in acid form or in the form of a salt of an alkali or alkaline-earth metal.

2. The HMPSA as claimed in claim 1, **characterized in that** the blend of triblock and diblock styrene copolymers consists of 60 to 80% SBS and 20 to 40% SB.

3. The HMPSA as claimed in either of claims 1 and 2, **characterized in that** the overall content of styrene units of the blend of triblock and diblock styrene copolymers is between 25 and 35%.

4. The HMPSA as claimed in one of claims 1 to 3, **characterized in that** the tackifying resins are chosen from:
(i) natural or modified colophony rosins and their hydrogenated, dehydrogenated, dimerized or polymerized derivatives or esterified by monoalcohols or polyols;
(ii) resins obtained by the hydrogenation, polymerization or copolymerization of mixtures of unsaturated aliphatic hydrocarbons having about 5, 9 or 10 carbon atoms derived from petroleum fractions;
(iii) terpene resins, optionally modified by the action of phenols; and
(iv) copolymers based on natural terpenes.

5. The HMPSA as claimed in one of claims 1 to 4, **characterized in that** the softening temperature of the tackifying resin or resins is between 95 and 110°C.

6. The HMPSA as claimed in one of claims 1 to 5, **characterized in that** the fatty acids are chosen from:
(α) saturated or unsaturated, monocarboxylic fatty acids, whether pure or as mixtures; and
(β) mixtures of saturated or unsaturated, polycarboxylic fatty acids of the dimer or trimer type.

7. The HMPSA as claimed in claim 6, **characterized in that** mixtures of monocarboxylic fatty acids (α) in the form of fractions derived from animal or vegetable fats are used.

8. The HMPSA as claimed in claim 6, **characterized in that** the mixtures of polycarboxylic fatty acids of dimer or trimer type (β) are used.

9. The HMPSA as claimed in one of claims 1 to 8, **characterized in that** the acid form of the fatty acids is employed.

10. The HMPSA as claimed in one of claims 1 to 9, **characterized in that** it comprises:
- 40 to 50% of the blend a) of triblock and diblock copolymers;
- 45 to 55% of one or more tackifying resins b); and
- 1 to 5% of one or more fatty acids c).

11. The HMPSA as claimed in one of claims 1 to 10, **characterized in that** it further includes 0.1 to 2% of one or more stabilizers or antioxidants.

12. A multilayer system comprising:
- an adhesive layer, consisting of HMPSA as defined in one of claims 1 to 11;
- a printable support layer adjacent said adhesive layer, consisting of paper or polymer film having one or more layers; and
- a protective layer adjacent said adhesive layer.

13. The multilayer system as claimed in claim 12, **characterized in that** the printable support layer is an OPP/PET bilayer film, the OPP layer of which is adjacent the adhesive layer.

14. A self-adhesive label that can be obtained by conversion of the multilayer system as defined in either of claims 12 and 13.

15. An article coated with the label as defined in claim 14.

16. The article as claimed in claim 15, consisting of a package or container made of glass or plastic, preferably a glass bottle.

17. A process for recycling a labeled article, comprising a step of debonding the label by immersing the labeled article in a basic aqueous solution maintained at a temperature of between 60 and 100°C, **characterized in that** the labeled article is as defined in either of claims 15 and 16.

## Patentansprüche

1. Schmelzhaftklebstoffzusammensetzung (HMPSA-Zusammensetzung), umfassend:
- a) 25 bis 50% einer Mischung von Styrolblockcopolymeren, bestehend aus 20 bis 90% eines oder mehrerer Dreiblockcopolymere vom Typ StyrolButadien-Styrol (oder SBS) und 10 bis 80% eines oder mehrerer Zweiblockcopolymere vom Typ StyrolButadien (oder SB), wobei der Gesamtgehalt der Mischung an Styroleinheiten zwischen 15 und 40% liegt;
- b) 45 bis 75% eines oder mehrerer verträglicher klebrigmachender Harze mit einer Erweichungstemperatur zwischen 80 und 150°C;
- c) 0,5 bis 5,5% einer oder mehrerer Fettsäuren mit 10 bis 22 Kohlenstoffatomen in der Kohlenwasserstoffkette in Säureform oder in Form eines Alklimetall- oder Erdalkalimetallsalzes.

2. HMPSA nach Anspruch 1, **dadurch gekennzeichnet, dass** die Mischung von Styroldreiblockcopolymeren und Styrolzweiblockcopolymeren aus 60 bis 80% SBS und 20 bis 40% SB besteht.

3. HMPSA nach Anspruch 1 oder 2, **dadurch gekennzeichnet, dass** der Gesamtgehalt der Mischung von Styroldreiblockcopolymeren und Styrolzweiblockcopolymeren an Styroleinheiten zwischen 25 und 35% liegt.

4. HMPSA nach einem der Ansprüche 1 bis 3, **dadurch gekennzeichnet, dass** die klebrigmachenden Harze unter:
- (i) natürlichen oder modifizierten Kolophoniumharzen und hydrierten, dehydrierten, dimerisierten, polymerisierten oder mit Monoalkoholen oder Polyolen veresterten Derivaten davon;
- (ii) durch Hydrierung, Polymerisation oder Copolymerisation von Mischungen von ungesättigten aliphatischen Kohlenwasserstoffen mit ungefähr 5, 9 oder 10 Kohlenstoffatomen, die aus Erdölfraktionen stammen, erhaltenen Harzen;
- (iii) gegebenenfalls durch Einwirkung von Phenolen modifizierten Terpenharzen und
- (iv) Copolymeren auf Basis von natürlichen Terpenen
ausgewählt sind.

5. HMPSA nach einem der Ansprüche 1 bis 4, **dadurch gekennzeichnet, dass** die Erweichungstemperatur des klebrigmachenden Harzes bwz. der klebrigmachenden Harze zwischen 95 und 110°C liegt.

6. HMPSA nach einem der Ansprüche 1 bis 5, **dadurch gekennzeichnet, dass** die Fettsäuren unter:
- (α) gesättigten oder ungesättigten Fettsäuren mit einer Carboxylgruppe, rein oder als Mischungen;
- (β) Mischungen von gesättigten oder ungesättigten Fettsäuren mit mehreren Carboxylgruppen vom Dimer- oder Trimer-Typ
ausgewählt sind.

7. HMPSA nach Anspruch 6, **dadurch gekennzeichnet, dass** man Mischungen von Fettsäuren mit einer Carboxylgruppe (α) in Form von Fraktionen, die von tierischen oder pflanzlichen Fettsubstanzen stammen, verwendet.

8. HMPSA nach Anspruch 6, **dadurch gekennzeichnet, dass** man Mischungen von Fettsäuren mit mehreren Carboxylgruppen vom Dimer- oder Trimer-Typ (β) verwendet.

9. HMPSA nach einem der Ansprüche 1 bis 8, **dadurch gekennzeichnet, dass** die Säureform der Fettsäuren eingesetzt wird.

10. HMPSA nach einem der Ansprüche 1 bis 9, **dadurch gekennzeichnet, dass** er:
- 40 bis 50% der Mischung a) von Dreiblock- und Zweiblockcopolymeren;
- 45 bis 55% eines oder mehrerer klebrigmachender Harze b) und
- 1 bis 5% einer oder mehrerer Fettsäuren c) umfasst.

11. HMPSA nach einem der Ansprüche 1 bis 10, **dadurch gekennzeichnet, dass** er außerdem 0,1 bis 2% eines oder mehrerer Stabilisatoren oder Antioxidantien umfasst.

12. Mehrschichtsystem, umfassend:
- eine Klebstoffschicht, bestehend aus dem HMPSA gemäß einem der Ansprüche 1 bis 11,
- eine bedruckbare Trägerschicht, die der Klebstoffschicht benachbart ist und aus Papier oder Polymerfolie mit einer oder mehreren Schichten besteht;
- eine Schutzschicht, die der Klebstoffschicht benachbart ist.

13. Mehrschichtsystem nach Anspruch 12, **dadurch gekennzeichnet, dass** es sich bei der bedruckbaren Trägerschicht um eine OPP/PET-Zweischichtfolie handelt, deren OPP-Schicht der Klebstoffschicht benachbart ist.

14. Selbstklebeetikett, das durch Umwandlung des Mehrschichtsystems gemäß Anspruch 12 oder 13 erhältlich ist.

15. Artikel, der mit dem Selbstklebeetikett gemäß Anspruch 14 beschichtet ist.

16. Artikel nach Anspruch 15, bestehend aus einer Verpackung oder einem Behälter aus Glas oder Kunststoff und vorzugsweise aus einer Glasflasche.

17. Verfahren zur Rezyklierung eines etikettierten Artikels, bei dem man das Etikett durch Eintauchen des ettiketierten Artikels in eine bei einer Temperatur zwischen 60 und 100°C gehaltene basische wässrige Lösung ablöst, **dadurch gekennzeichnet, dass** der etikettierte Artikel wie in den Ansprüchen 15 oder 16 definiert ist.
